# EUROPÄISCHE PATENTSCHRIFT

(11) **EP 0 354 321 B1**
(45) Veröffentlichungstag und Bekanntmachung des Hinweises auf die Patenterteilung: **13.10.1993**
(21) Anmeldenummer: 89110740.1
(22) Anmeldetag: 14.06.1989
(51) Int. Cl.: H04N 9/29

(54) **Schaltungsanordnung zur Entmagnetisierung der Lochmaske in einer Farbbildröhre**
Circuit arrangement for degaussing the shadow mask in a colour picture tube
Circuit pour la désaimantation du masque d'ombre dans un tube image couleur

(30) Priorität: 15.07.1988 DE 3824038
(43) Veröffentlichungstag der Anmeldung: 14.02.1990
(73) Patentinhaber: Deutsche Thomson-Brandt GmbH, 78003 Villingen-Schwenningen (DE)
(72) Erfinder: Hartmann, Uwe, D-8391 Untergriesbach (DE); Ohnemus, Fritz, D-7730 Villingen-Schwenningen (DE); Lohmüller, Eduard, D-7730 Villingen-Schwenningen (DE)

(56) Entgegenhaltungen:
- GB-A- 2 193 615
- PATENT ABSTRACTS OF JAPAN, Band 12, Nr. 308 (E-647)[3155], 22. August 1988; & JP-A-63 73 788 (NEC CORP.) 04-04-1988
- IDEM

## Beschreibung

Die Erfindung betrifft eine Schaltungsanordnung zur Entmagnetisierung der Lochmaske in einer Farbbildröhre eines Farbbildwiedergabegerätes mit Hilfe einer an dieser angeordneten Entmagnesisierungsspule, die in den Wechselstromkreis einer Gleichrichterbrückenanordnung geschaltet ist, in deren Gleichstromkreis ein gesteuerter elektronischer Widerstand geschaltet ist, der den Entmagnetisierungsstrom bis auf den Wert Null abklingen läßt.

Bekannte Anordnungen zum Entmagnetisieren der Lochmaske besitzen Widerstände mit positivem Temperaturkoeffizienten (PTC), die gegenseitig in Wärmekontakt stehen. Diese PTC's lassen zeitabhängig den durch die Entmagnetisierungsspule fließenden Wechselstrom kontinuierlich bis auf einen durch den Wert der Widerstände vorgegebenen Reststrom abfallen (Limann, Fernsehtechnik ohne Ballast, 10.Auflage 1973 Seite 159). Um auch diesen Reststrom noch auszuschalten sind Vorrichtungen wie z.B. ein Relais oder ein TRIAC vorgesehen ( z.B. Schaltbild SABA Schauinsland T 3715 telecommander G, 1971). Diese Abschaltung geschieht schlagartig, wodurch ein Restfeld stehen bleibt, was Fehler in der Gleichförmigkeit des Weißabgleichs zur Folge haben kann.

Es ist auch bekannt, den Entmagnetisierungsstrom bis auf den Wert Null abklingen zu lassen, indem ein gesteuerter elektronischer Stellwiderstand in den Gleichstromzweig einer Gleichrichterbrücke kontinuierlich hochohmig gesteuert wird ( "Patent Abstracts of Japan", Band 12, Nr. 308 (E-647), 22.August 1988; & JP-A-6 373 788). Hier ist der elektronisch gesteuerte Stellwiderstand von Beginn der Steuerung an mit dem großen Anfangswert des Entmagnetisierungsstromes von ca 6 Ampere belastet und muß deshalb entsprechend groß dimensioniert sein, was das Bauteil verteuert.

Der Erfindung liegt die Aufgabe zugrunde, insbesondere den bei großformatigen Farbbildröhren erhöhten Fremdfeldeinfluß zu vermindern, um damit die Landungsreserve der Elektronenstrahlen zu verbessern, indem die Entmagnetisierung der Lochmaske insbesondere nach beliebiger kurzer Einschaltfolge gewährleistet wird, wobei der verwendete Stellwiderstand keinen großen Belastungen ausgesetzt ist und deshalb klein sein kann. Diese Aufgabe wird durch die im Patentanspruch angegebene Maßnahme gelöst. Weitere vorteilhafte Ausgestaltungen der Erfindung sind in den Unteransprüchen beschrieben.

Nachstehend wird die Erfindung mit Hilfe der Zeichnung erläutert.
- Figur 1: zeigt die Schaltungsanordnung zur Entmagnetisierung
- Figur 2 bis 4: zeigen die sich durch die Schaltungsanordnung nach Figur 1 ergebenden Strom- und Spannungsverläufe zur Erläuterung der Wirkungsweise der Schaltungsanordnung.

Die beschriebene Anordnung bewirkt die Entmagnetisierung nach jedem Einschalten des Gerätes, also auch mittels Fernbedienung. Bekanntlich wird derzeit bei allen üblichen Fernsehgeräten die Entmagnetisierung mittels Doppel-PTC durchgeführt. Diese Anordnung ist relativ billig, funktioniert jedoch nur nach dem ersten Betätigen des Netzschalters. Im stand-by-Betrieb ist der PTC heiß, so daß der Entmagnetisierungsvorgang nicht abläuft, wenn das Gerät mittels Fernbedienung eingeschaltet wird.

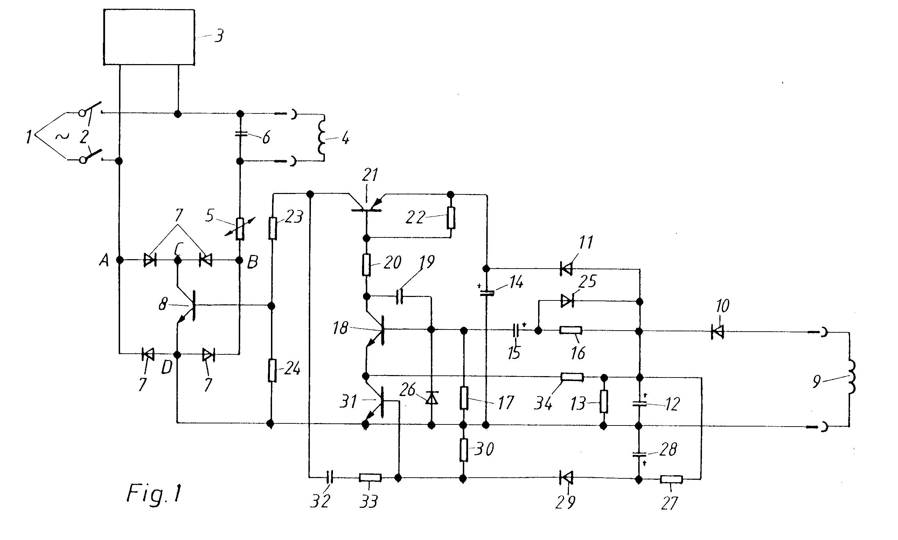

In Figur 1 ist an die Klemmen 1 die Netzwechselspannung gelegt, die über einen Netzschalter 2 das Fernsehgerät 3 mit Strom versorgt und die außerdem an die Entmagnetisierungsschaltung gelangt. Diese besteht aus der Entmagnetisierungsspule 4, die in Reihe mit dem PTC 5 liegt. Parallel zur Entmagnetisierungsspule 4 ist ein Kondensator 6 geschaltet, der die Aufgabe hat, zeilenfrequente Spannungen kurzzuschließen. Die Serienschaltung aus Entmagnetierungsspule 4 und PTC 5 ist über einen Brückengleichrichter 7 an das Netz gelegt. Hierbei sind die Wechselspannungsanschlüsse A, B mit dem Netz bzw. der Reihenschaltung aus Entmagnetisierungsspule 4 und PTC 5 verbunden. Die beiden Gleichspannungsanschlüsse C, D der Brückengleichrichteranordnung 7 sind mit einem steuerbaren elektronischen Stellwiderstand verbunden, der im gezeigten Ausführungsbeispiel aus einem Transistor 8 besteht, dessen Kollektor bzw. Emitter mit je einem Gleichspannungsanschluß C bzw. D der Brückengleichrichteranordnung 7 verbunden ist, und an dessen Basis und Emitter die noch zu beschreibende Steuerschaltung angeschlossen ist. Der Transistor 8 muß zu Beginn des Entmagnetisierungsvorgangs voll in der Sättigung betrieben werden, da dann der maximale Kollektorstrom fließt und Schaltverluste zur Schonung des Transistors vermieden werden. Das Zurückregeln des Kollektorstroms geschieht erst, wenn dieser durch den PTC 5 bereits auf einem relativ kleinen Wert reduziert worden ist.

Nach Einschalten des Gerätes 3 liefert der Zeilentransformator über eine zusätzliche Wicklung 9 Zeilenimpulse, die über die Dioden 10 und 11 gleichgerichtet werden. Am Kondensator 12 mit parallel geschaltetem Widerstand 13 baut sich eine Gleichspannung ebenso auf wie am Kondensator 14. Zweckmäßigerweise geschieht die Gleichrichtung der an einer Sekundärwicklung erhaltenen Sekundärspannung aus der Wicklung 9 in Hinlaufgleichrichtung, d.h. während der Zeit, in der der Elektronenstrahl in der Bildröhre abgelenkt wird und die Primärwicklung des Zeilentransformators über den Zeilenschalter an die Betriebsspannung gelegt wird, da die Hinlaufspannung geregelt ist. Es ist aber auch denkbar, die Betriebsspannung durch Hinlaufgleichrichtung aus einer Wicklung eine zeilenfrequent synchronisierten Schaltnetzteils zu gewinnen. Der Kondensator 15 wird über den Widerstand 16 und die Diode 10 aufgeladen und es fließt ein langsam abfallender Ladestrom, der am Basiswiderstand 17 eine Steuerspannung für den Transistor 18 liefert, wodurch dieser durchgeschaltet wird. Der als Stromverstärker wirkende Transistor 18 besitzt eine zeilenfrequente Gegenkopplung über den Kondensator 19. Der leitende Transistor 18 öffnet über den Widerstand 20 den Transistor 21, der die über die Diode 11 gleichgerichtete und am Kondensator 14 gespeicherte am Basiswiderstand 22 liegende Betriebsspannung über den Spannungsteiler 23, 24 an die Basis des Transistors 8 legt. Mit Aufladung des Kondensators 15 verringert sich zeitabhängig die Steuerspannung für den Transistor 18, so daß auch die Spannung am Spannungsteiler 23, 24 abnimmt, wodurch der Transistor 8 kontinuierlich hochohmiger wird. Die Folge ist eine ebensolche Minderung des Kollektorstromes und damit des Entmagnetierungsstromes durch die Entmagnetisierungsspule 4, bis dieser auf den Wert Null abgefallen ist. Dieser Vorgang dauert ca. 30 Sekunden. Nach Ablauf der Entmagnetisierung sind die Transistoren 18, 21 und 8 gesperrt. Beim Ausschalten des Gerätes nimmt die Gleichspannung am Kondensator 12 durch den parallel geschalteten Widerstand 13 ab. Die Dioden 25 und 26 entladen auch den Kondensator 15 über den Widerstand 13 in kürzester Zeit. Selbst nach einer kurzzeitigen Netzunterbrechung läuft die Schaltung unter gleichen Anfangsbedingungen ab, so daß sich unmittelbar darauf der gesamte Entmagnetisierungsvorgang wiederholen kann.

Nach dem Einschalten des Gerätes erreichen die Gleichspannungen an den Kondensatoren 12 und 14 erst nach etwa 300 msec. ihren Sollwert. Dadurch erreicht auch der Basisstrom des Leistungstransistors 8 seinen Maximalwert erst nach Ablauf dieser Zeitspanne, um den Transistor 8 in die Sättigung zu steuern. Deshalb ist eine Verzögerungsanordnung vorgesehen, die den maximalen Basisstrom z.B. erst nach 500 msec. freigibt. Diese Einschaltverzögerung erfolgt über eine durch einen Widerstand 27 in Verbindung mit einem Kondensator 28 vorgegebene Zeitkonstante. Die sich am Kondensator 28 aufbauende Spannung gelangt über eine Entkopplungsdiode 29 an den Basiswiderstand 30 eines Schalttransistors 31, dessen Emitter-Kollektor-Strecke den Emitter des Transistors 18 auf Bezugspotential schaltet, der bis dahin über den Widerstand 34 auf dem Potential des Kondensators 12 lag. Sobald der Transistor 31 zu leiten beginnt, wird er sehr schnell in die Sättigung gesteuert. Dies geschieht mit Hilfe einer Rückkopplung innerhalb eines Zeitraumes von 1 msec, indem die Spannung am Kollektor des Transistors 21 über den Kondensator 32 und den Widerstand 33 auf die Basis des Transistors 31 geschaltet wird.

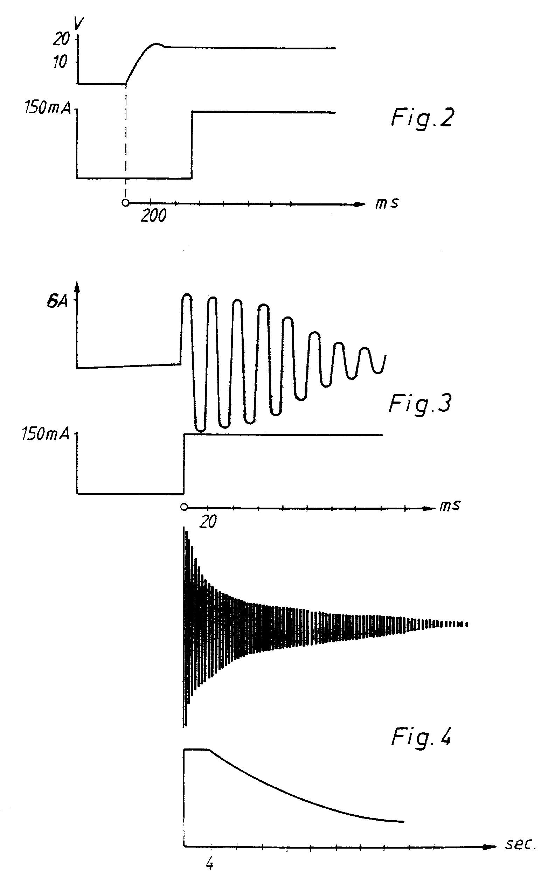

Die Figuren 2 bis 4 veranschaulichen die Wirkungsweise der soeben beschriebenen Schaltung.

In Figur 2 ist der Spannungsverlauf am Kondensator 14 aufgetragen, und man erkennt, daß die Spannung am Kondensator 14 erst nach ca. 200 msec. ihren Sollwert erreicht. Darunter ist das verzögerte Einschalten des Transistors 8 dargestellt, indem erst nach ca. 500 msec. der volle Basisstrom eingeschaltet wird.

In Figur 3 ist dargestellt, wie der Basisstrom den Transistor 8 bereits zu Beginn der ersten Schwingung des Kollektorstroms und damit des Entmagnetisierungsstroms, der eine Größe von ca 6 Ampere besitzt, durch die Entmagnetisierungsspule 4 gesättigt hat.

Figur 4 zeigt in einem größeren Zeitmaßstab, daß der Basisstrom über eine längere Zeitdauer (4 sec. ) seinen maximalen Wert behält, in welcher der große Entmagnetisierungsstrom fließt. Erst wenn der Entmagnetisierungsstrom durch die Wirkung des PTC-Widerstandes 5 einen verminderten Betrag angenommen hat, wird der Basisstrom so lange heruntergeregelt, bis nach ca. 30 sec. der Transistor 8 völlig gesperrt wird.

## Patentansprüche

1. Schaltungsanordnung zum Entmagnetisieren der Lochmaske in einer Farbbildröhre eines Farbbildwiedergabegerätes mit Hilfe einer an der Farbbildröhre angeordneten Entmagnetisierungsspule, die in den Wechselstromkreis einer Gleichrichterbrückenanordnung geschaltet ist, in deren Gleichstromkreis ein gesteuerter elektronischer Stellwiderstand geschaltet ist, der den Entmagnetisierungsstrom bis auf den Wert Null abklingen läßt,
**dadurch gekennzeichnet**, daß in Serie zur Entmagnetisierungsspule (4) ein Widerstand (5) mit positivem Temperaturkoeffizienten (PTC) geschaltet ist und daß eine Steuerschaltung zur Ansteuerung des elektronischen Stellwiderstandes (8) vorgesehen ist, welche eine Anordnung (10-12, 14, 21-24) zur Verzögerung der Ansteuerung des elektronischen Stellwiderstandes (8) besitzt, die diesen solange auf seinem minimalen Wert hält, bis der Entmagnetisierungsstrom aufgrund des Widerstandes (5) auf einen Bruchteil seines Anfangswertes abgeklungen ist.

2. Schaltungsanordnung nach Anspruch 1,
dadurch gekennzeichnet, daß die Steuerscyhltung eine weitere Anordnung (27-31) zur Verzögerung der Ansteuerung des elektronischen Widerstandes (8) besitzt, die die Entmagnetisierungsschaltung erst bei Erreichen ihrer vollen Betriebsspannung wirksam schaltet.

3. Schaltungsanordnung nach Anspruch 1,
dadurch gekennzeichnet, daß die Betriebsspannung für die Steuerschaltung durch Hinlaufgleichrichtung aus einer zusätzlichen Wicklung (9) des Zeilentransformators des Bildwiedergabegerätes gewonnen wird.

4. Schaltungsanordnung nach Anspruch 1,
dadurch gekennzeichnet, daß nach Ablauf der durch die Verzögerungsanordnung (27-31) vorgegebenen Zeitdauer mit Hilfe einer Rückkopplungsschaltung (32, 33) das volle Durchschalten des in der Brückengleichrichteranordnung (7) leigenden elektronischen Stellwiderstandes (8) beschleunigt wird.

## Claims

1. A circuit arrangement for the degaussing of the shadow mask in a colour picture tube of a colour picture reproduction appliance with the aid of a degaussing coil arranged on the colour picture tube and connected in the a.c. circuit of a rectifier bridge arrangement, in the d.c. circuit of which is connected a controlled electronic variable resistor, which allows the degaussing current to decay to the value zero,
characterised in that a resistor (5) with a positive temperature coefficient (PTC) is connected in series with the degaussing coil (4) and that a control circuit is provided for the control of the electronic variable resistor (8), the control circuit comprising an arrangement (10-12, 14, 21-24) for delaying the control of the electronic variable resistor (8) and which maintains this at its minimum value until the degaussing current has decayed as a result of the resistor (5) to a fraction of the initial value.

2. A circuit arrangement according to claim 1,
characterised in that the control circuit comprises a further arrangement (27-31) for delaying the control of the electronic resistor (8) and which actuates the degaussing circuit when it reaches its full operating voltage.

3. A circuit arrangement according to claim 1,
characterised in that the operating voltage for the control circuit is obtained by forward rectification from an additional winding (9) of the line transformer of the picture reproduction appliance.

4. A circuit arrangement according to claim 1,
characterised in that after the end of the time period predetermined by the delay arrangement (27-31) and with the aid of a feedback circuit (32,33) the full switch on of the electronic variable resistor (8) located in the rectifier bridge arrangement (7) is accelerated.

## Revendications

1. Circuit pour la désaimantation du masque à trous dans un tube image couleur d'un appareil de restitution d'images couleur à l'aide d'une bobine de désaimantation placée sur celui-ci qui est commutée dans le circuit à courant alternatif d'un circuit redresseur en pont dans le circuit à courant continu duquel une résistance électronique commandée, qui laisse le courant de désaimantation s'évanouir jusqu'à la valeur zéro, est commutée,
caractérisé en ce qu'une résistance (5) avec un coefficient de température positif (C.T.P.) est montée en série avec la bobine de désaimantation (4) et qu'un circuit de commande est prévu pour exciter la résistance électronique de réglage (8) qui posséde un dispositif (10-12, 14, 21-24) pour retarder l'excitation de la résistance électronique de réglage (8) qui maintient celle-ci à sa valeur minimale jusqu'à ce que le courant de désaimantation se soit évanoui, en raison de la résistance (5), à une fraction de sa valeur initiale.

2. Circuit selon la revendication 1, **caractérisé en ce** que le circuit de commande posséde un autre dispositif (27-31) pour retarder l'excitation de la résistance électronique (8) qui ne commute le circuit de désaimantation de manière active que lorsque toute sa tension de fonctionnement est atteinte.

3. Circuit selon la revendication 1, **caractérisé en ce** que la tension de fonctionnement pour le circuit de commande est obtenue par redressement de l'aller à partir d'un enroulement supplémentaire (9) du transformateur de lignes de l'appareil de restitution d'images.

4. Circuit selon la revendication 1, **caractérisé en ce** que la commutation en plein de la résistance électronique de réglage (8) qui se trouve dans le circuit de redressement à pont (7) est accélérée après écoulement de la durée prédéterminée par le circuit de temporisation (27-31) à l'aide d'un circuit de rétroaction (32, 33).
